# EUROPEAN PATENT SPECIFICATION

(11) **EP 0 955 158 B1**
(45) Date of publication and mention of the grant of the patent: **02.07.2003**
(21) Application number: 99660070.6
(22) Date of filing: 30.04.1999
(51) Int. Cl.: B32B 27/12, D04H 13/00, D06N 3/04, D06N 3/00

(54) **Laminate material, a process for manufacturing the same and use of the laminate**
Mehrschichtmaterial, Verfahren zur Herstellung und Verwendung desselben
Matériau stratifié, méthode pour sa fabrication et son utilisation

(30) Priority: 04.05.1998 FI 980978
(43) Date of publication of application: 10.11.1999
(73) Proprietor: Suominen Nonwovens Ltd., 29251 Nakkila (FI)
(72) Inventor: Bergholm, Heikki, 00340 Helsinki (FI); Ojanen, Marja, 32700 Huittinen (FI); Saikkonen, Marjo, 29250 Nakkila (FI)
(74) Representative: Grew, Eva Regina

(56) References cited:
- US-A- 5 733 822
- SUBHASH K. BATRA ET AL: "The Nonwoven Fabrics Handbook", 1999, ASSOCIATION OF THE NONWOVEN FABRICS INDUSTRY, CARY, NORTH CAROLINA
- 'Webster's Third New Inernational Dictionary', MERRIAM-WEBSTER INC., SPRINGFIELD, MASSACHUSETTS, U.S.A. * page 1267 *

## Description

### Field of the invention

This invention relates to a liquid impermeable laminated material, to a process for its production and to the use of this material. More precisely, the laminate contains at least one layer of a thermobonded nonwoven fabric of carded polyolefin staple fibers and, laminated thereto, at least one layer of a thermoplastic polymeric film.

### Background of the invention

It is known technology to coat a substrate with a polymeric film to make a laminate. The substrates of the laminates can be made by any available nonwoven manufacturing method. The substrate can be, for example, thermobonded, spunlaced, spunbonded or melt blown. There are many laminating methods available. The substrate and the film can be bonded together, for example, by using adhesives, or by heat and pressure, or by a combination of these two. Ultrasonic bonding is one application of heat and pressure lamination.

At the end of the 1940's, the foundations for extrusion coating operation were laid. In the 1950's, the work of coating lightweight papers and paperboard stocks experimentally with polyethylene began. The decade from 1960 to 1970 witnessed an outstanding growth of technological advances in the extrusion coating industry. The manufacturers of the equipment required for extruding and handling the various substrates embarked on a intensive development program involving screw designs, heating, equipment for primer application for improving adhesion, temperature control, and a myriad of developments that allowed increased speeds and wider coatings. The endless stream of technological advances has kept the process uptodate and competitive, even though basically the process has not significantly changed except for some resin modifications and new equipment handling techniques.

At least from the 1960's, the extrusion coating method has been used for coating nonwoven fabrics. Union Carbide was granted a patent in 1962 (US 3,058,863) concerning polyethylene film-coated polyalkylene fiber fabrics. In 1972 Johnson&Johnson patented (GB 1 403 603) a disposable diaper where the extrusion laminating technique was used. Toray Industries patented in 1972 (GB 1 347 176) a laminate material, using e.g. the extrusion method for the lamination. Standard Oil Company patented in 1983 (US 4,368,233) coated woven and nonwoven polyolefin articles. Peaudouce et al. (GB 2 286 558) has patented a method for manufacturing an extrusion coated material. Sumitomo has patented a non-anchor extrusion coating process for producing laminates (EP 0 781 653).

Laminates manufactured by using adhesives are described in the US- patent 5,560,974 of Kappler Safety Group. Lamination done by using heat and pressure is described in the following patents: Kimberly-Clark WO97/23676, Exxon Chemical US 4,929,303 and Himont US 5,368, 927.

Nonwoven fabrics are typically made by making a web of fibers, and then thermally bonding the web. More specifically, staple fibers are converted into nonwoven fabrics using, for example, a carding machine, and then the carded fabric is thermally bonded. Thermal bonding can be achieved using various heating techniques, including heating with heated rollers, hot air and heating through the use of ultrasonic welding. Conventional carded thermally bonded nonwoven fabrics exhibit good loft and softness properties, but less cross-directional strength than spunbonded fabrics.

Desirable properties of a nonwoven/film laminate are softness, flexibility, noiselessness and good adhesion, especially when the laminates are intended for use in hygiene and medical applications, for example disposable diapers, bed pads, protective covers and incontinent briefs. Softness, flexibility and noiselessness are important mainly for the sake of the users' convenience. Adhesion, on the other hand, is also of great technical importance in the further processing of the laminate. The adhesion between the fabric and the film, i.e. the peel strength, has to be so good that no delamination occurs during the manufacture of the end product. In the prior art laminates, one problem has been that the cloth-like feel of the laminate is easily lost, when the adhesion between the film and fabric is made sufficiently strong. Adhesion has been previously improved i.a. with corona treatment, with the use of adhesives, higher bonding/melt temperature or use of bicomponent fibers. Adhesives can introduce solvent residues into the article, which are undesirable in medical or hygienic applications. Adhesives also cause the article to be more rigid, paper-like and noisy. The use of higher temperatures can also make the laminate rigid.

The use of bicomponent fibers in the manufacturing of nonwoven fabrics for nonwoven/film laminates is known from the prior art. Bicomponent fibers can be formed from at least two polymers extruded from separate extruders but spun together to form one fiber. The polymers are arranged in distinct zones across the cross-section of the bicomponent fiber and extend continuously along the length of the fiber. In the so-called sheath/core bicomponent fiber, a first polymer is surrounded by a second polymer. For example Kimberly-Clark discloses in WO 97/23676 that the peel strength of a laminate made from sheath/core bicomponent fibers is 125% better than laminates made by using fibers with no zones of density difference in the fiber.

Over the years improvements have been made in fibers which provide better bond strengths. For example the Kozulla patents Nos. US 5,281,378, US 5,318,735 and US 5,431,994 are directed to processes for preparing polypropylene containing fibers by extruding a polypropylene containing material. The method includes quenching of the hot extrudate in an oxygen containing atmosphere which is being controlled so as to effect oxidative chain scission degradation of the fiber surface. By controlling the quenching to obtain oxidative chain scission degradation of the surface, the polymer in the surface layer will have a lower molecular weight than the polymer in the core. The resulting fiber will thus essentially contain a plurality of zones, defined by different characteristics including differences in melt flow rate, molecular weight, melting point, birefringence, orientation and crystallinity. Fibers with oxidatively degraded outer surface are called skin-core fibers Laminates, which contain at least one nonwoven made from skincore filaments, are described in US 5,733,822. The unique properties of skin-core fibers make them ideal for bonding under pressure at low temperatures, while imparting superior strength. Since bonding occurs before reaching the melting point of the fiber, high strength is achieved without compromising the softness in the nonwoven structure.

### Summary of the invention

The purpose of this invention is to provide an improved barrier laminate from a nonwoven fibrous substrate and a film, which laminate is soft, strong, noiseless, and cloth-like while still exhibiting excellent adhesion between the nonwoven substrate and the film. The object of the invention is achieved by providing a laminate comprising at least one thermobonded nonwoven fabric layer made from carded polyolefin staple fibers, and, laminated thereto, at least one layer of a thermoplastic film, wherein the polyolefin fibers are skin-core fibers, i.e. they have an oxidatively degraded outer surface. By using skin-core fibers in the thermobonded nonwoven layer, the adhesion between the substrate and the film is at least 200%, preferably even 300% better than in laminates where the substrate is made from corresponding conventional oxidatively nondegraded fibers.

The invention is also directed on a process to produce the laminate and as well as to the use of the laminate.

### Detailed disclosure of the invention

The laminate according to this invention is made of at least one layer of a nonwoven fabric substrate and at least one layer of thermoplastic film. The nonwoven substrate is manufactured by thermal bonding of the fabric, which is made from carded staple fibers of a polyolefin, preferably polypropylene. The laminate is characterized in that the nonwoven web is made of skin-core fibers, i.e. fibers with an oxidatively degraded outer surface. The use of the skin-core fibers improves the strength and especially the peel strength of the laminate without affecting the softness.

In order to make the laminate, the nonwoven fabric is extrusion coated or heat laminated with a thermoplastic polymeric film. The material used for extrusion coating is a polyolefin, preferably polyethylene, or a copolymer, such as ethylvinylacetate (EVA) or ethylmethylacrylate (EMA). The film can also be in the form of a breathable monolithic film, i.e. a film impervious to small particles but containing no micropores or holes. When a heat lamination coating method is used, any suitable polymeric material can be used, for example breathable polymeric monolithic films, or a film material containing a filler, suitably an inorganic filler, such as calcium carbonate, talc or barium sulfate, which, when stretched, will provide for a microporous structure in the film.

A second object of this invention is a process to produce the laminate described above. When the laminate is made by extrusion coating of the substrate, such extrusion coating can be done either on-line or off-line. The extrusion coating method is advantageous in many ways as no adhesive is necessarily needed between the substrate and the film. It is easy to produce films with different thicknesses and also very thin films, for example in the range of 5 - 30 g/m².

The laminates according to the invention can also be made using heat lamination. The unique properties of the skin-core fibers make them ideal for bonding under pressure at lower temperatures, such as 100 - 160 °C while imparting superior strength. In addition, the laminates according to this invention have even better peel strength between the film and the substrate than the known laminates where the substrate is made of bicomponent fibers. Furthermore, the substrates to be used for making the laminates of the invention provide the additional economical advantage in that only a single polymeric material is used and the fabric can be made very thin without loosing the its strength. In bicomponent fibers, at least two different polymeric materials are used, which makes the process more complicated.
The use of the laminate, especially for medical and hygiene applications, such as in disposable diapers, sanitary napkins, bed pads, protective covers and incontinent briefs, is also an object of the invention.

Next the invention will be described with reference to the drawing, wherein
Figure 1 illustrates schematically an extrusion coating process, and
Figure 2 illustrates schematically a thermal bonding process, calender bonding.

According to an advantageous embodiment, the substrate of the laminate is a nonwoven fabric made of carded staple fibers. The fibers are polyolefin, preferably polypropylene, skin-core fibers, which as such are commercially available, e.g. from Fiber Visions Incorporated. The fiber fineness is 1.0 - 4.0 dtex, preferably 1.5 -2.4 dtex and the length of the fibers can vary from 25 mm to 60 mm, preferably 25 - 50 mm. The skin-core fibers used have a decreasing weight average molecular weight in a direction from the core towards the surface of the fiber. Moreover, the inner core zones, have a melting point and orientation that is higher than those in the outer surface zone. The use of skin-core fibers provides a greater bonding window both at thermobonding and coating. At thermobonding, lower bonding temperatures, ranging from 150°C to 160°C, which is about 5-10°C lower than for typical staple fibers, can be utilized to provide for a softer nonwoven fabric and better peel strength between the substrate and the film in the final product. The bonding area can vary from 10 % to 50 %, preferably from 15 % to 40 %. The bonding pressure is at least 20 kP/cm, preferably 60 kP/cm -120 kP/cm. The line speed can vary from 50 m/min to 300 m/min, preferably 100 - 200 m/min. The weight per unit area of the fabric can vary from 15 g/m² to 70 g/m².

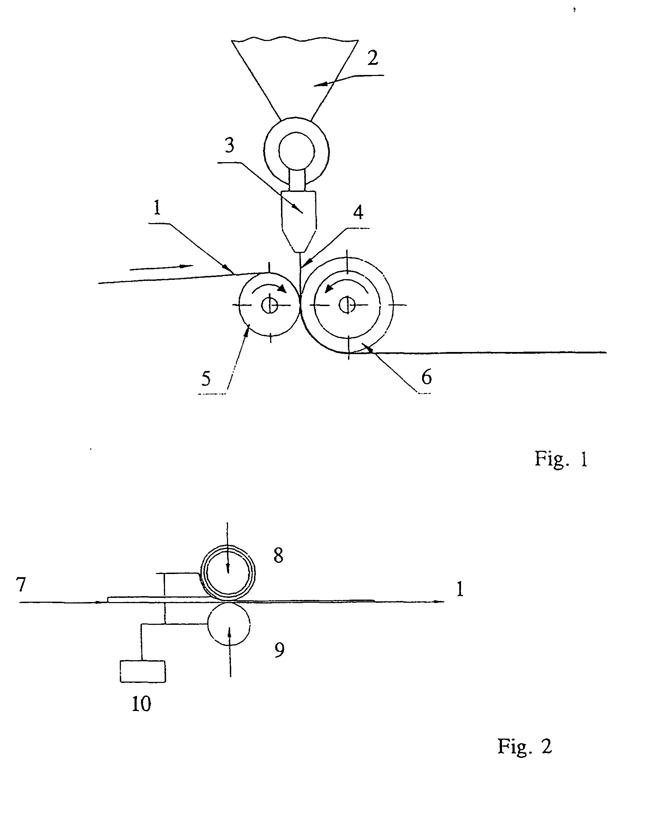

A thermal bonding process, calender bonding, is schematically shown in the Figure 2, showing a feed web (7), an engraved roll (8), a smooth roll (9), a roll heating unit (10) and web to winding or coating (1).

Before the substrate is extrusion coated the surface of the nonwoven fabric can be activated, for example by corona treatment, to improve adhesion.

After obtaining the nonwoven fabric, the lamination can be carried out as an on-line process. Another possibility is to wind up the fabric on a roll and coat the fabric in an off-line extrusion coating or heat lamination machine. The extrusion coating process is shown in Figure 1.

In the extrusion process, a thermoplastic film is extruded on the nonwoven fabric. Extrusion coating is a process by which one or more polymer melt layers are extruded as a film through a flat die onto a substrate to provide a composite or laminate structure. According to the invention, the material of the film is a polyolefin, preferably polyethylene. The weight of the film can be from 5 g/m² to 30 g/m². In a typical extrusion process, a viscous melt is forced under pressure through a shaping die in a continuous stream. During the process the plastic resin is heated, melted and pumped by an extruder (2) into a flat die (3). A typical screw for extrusion coating consists of the following four zones: the feed, the compression, the metering and the mixing zone. Melting of the polymer starts at the compression zone, and is completed at the metering zone. The temperature of the screw increases while the polymer flows through the screw. The temperature depends on the polymer used in the coating. The polymer melt is then forced through the die lips positioned above a nip between a pressure roll (5) and a chill roll (6). The pressure loaded driven rolls then combine the molten extruded film (4) with the moving substrate (1) in the nip section of the cylindrical rolls. The coated web is then rapidly cooled and wound up.

In the heat lamination process, the film is prepared separately. During lamination, the film is unwound from the roll and laminated with the nonwoven fabric by using heat and pressure. The temperature of the calenders depends on the materials of the film and the fabric.

As stated earlier, according to one embodiment of the invention, the laminate can be made breathable by using a microporous or monolithic polymeric film. The breathability can be achieved, for example, by adding inorganic fillers in the polymer and then stretching the film, or by using breathable polymers, such as using polyether block amides.

The laminate according to this invention can be used in medical and hygiene applications, for example as back sheet material for baby diapers, bedpads, incontinent briefs, protective covers and infection control products.

In the following examples, the laminates were tested according to the following test procedures.

Peel strength: The peel strength was determined according to the ASTM D 1876-95 standard (peeling angle 180°; the crosshead separation rate used was 200 mm/min). The model of the machine used was ZWICK 1435. The loading cell was 10 N.

Softness: (Touch panel) There is no standard method for determining the softness of nonwoven/film laminates. A group of eight persons (A-H) was selected and they were given a certain number of test samples in series so that the thickness of the film was the same in each series but the material of the film and the nonwoven was different. There were also other samples in this test than those disclosed in Tables 1 and 2. The purpose of the test was to put the samples in order so that the softest sample was given the first place.

Mass per unit area (Grammage): EDANA Recommended Test Methods 40.3-90

The following examples are given without limiting the scope of the invention. The lamination in these examples was done using an off-line extrusion coating process. The lamination can also be done as an in-line extrusion coating process, or by heat lamination using heated calenders.

### Example 1

The raw materials used for the film were 90 parts by weight of a commercial extrusion coating grade low density polyethylene having a melt flow index 15 g/10 min (190°C; 2.16 kg; ISO 1133) and 10 parts by weight of a master batch of polyethylene containing 50% by weight of TiO₂. The nonwoven web was produced from commercial skin-core polypropylene fiber (2.2 dtex/40 mm; Meraklon T6 300 MI 2.2/40, manuf. Moplefan S.r.I).

A nonwoven fabric was made by making a web of the fibers, and then thermally calender point bonding the same. The process conditions were the following: temperature 155°C and line speed 120 m/min. The bonding area was 19.8 %. The weight per unit area of the nonwoven fabric was 22 g/m².

The extrusion coating line consisted of winders, pre- and post-treatments, three extruders and a die with 5-layer possibility. The working width of the laminator was 600-830 mm. The two extruders used were 11.4 cm (4.5") single screw extruders having a L/D ratio of 24.

The temperatures of the heating zone of the extruder ranged from 200°C to 300°C. The coating width was 800 mm and the gap width was 650 µm. Other parameters used were air gap: 200 mm; matte chill roll temperature: 10°C; pressure (applied by a pressure cylinder): 0.6 kp/cm² and the line speed: 150 m/min.

### Example 2 (Comparison)

The fiber used in the nonwoven manufacturing was a typical thermal bonding polypropylene fiber (2.2 dtex/ 40 mm; JWS PP X115 163, manuf. J. W. Suominen Oy). The raw materials used for the film were the same as in the Example 1. All the process conditions were the same as in the Example 1, except that the bonding temperature was 163°C.

### Results from the examples

The peel strength of the laminate made from the skincore-fiber nonwoven was three times the peel strength of a normal polypropylene nonwoven. The results are shown in Table 1.

**Table 1.**

| The weight and the peel strength of the laminates according to the invention compared to the prior art laminates. | | | |
|---|---|---|---|
| Coating weight | Total weight | Peel strength [kN/m] | |
| [g/m²] | [g/m²] | Sample A | Sample B |
| 8 | 30 | 4*10⁻³ | 0 |
| 10 | 32 | 10*10⁻³ | 2*10⁻³ |
| 12 | 34 | 24*10⁻³ | 8*10⁻³ |
| Sample A : Laminate according to the invention, the substrate is made of skin-core type polypropylene fiber. | | | |
| Sample B : Comparative laminate, the substrate is made of typical thermal bonding polypropylene fiber. | | | |

The results from the touch panel are shown in Table 2.

**Table 2.**

| The results from the touch panel. | | | | | | | | | |
|---|---|---|---|---|---|---|---|---|---|
| Person Sample | A | B | C | D | E | F | G | H | Number of first places |
| Sample A (12 g) | II | II | II | I | I | I | II | I | 4 |
| Sample B (12 g) | I | I | I | II | II | II | I | II | 4 |
| | | | | | | | | | |
| Sample A (10 g) | II | II | II | I | I | I | II | I | 4 |
| Sample B (10 g) | I | I | I | II | II | II | I | II | 4 |
| | | | | | | | | | |
| *Sample A (8 g) | II | I | I | II | I | II | I | I | 5 |
| *Sample B (8 g) | I | I | I | I | II | I | II | I | 6 |

| | | | | | | | | | |
|---|---|---|---|---|---|---|---|---|---|
| * The film was so thin that it was very difficult to notice any difference in the softness of the laminates. I = the sample was the softest II = the sample was second softest | | | | | | | | | |

The softness test (touch panel) showed clearly that not only is the softness of the laminate according to this invention excellent, but the adhesion is three times better in the A-samples than in the B-samples. Thus the laminate of the invention provides an ideal combination of strength, softness and good adhesion.

## Claims

1. A laminate comprising at least one nonwoven thermobonded fabric layer of carded polyolefin staple fibers, and, laminated thereto, at least one layer of a thermoplastic film, **characterized in that** the polyolefin fibers have an oxidatively degraded outer surface.

2. The laminate according to claim 1 **characterized in that** the film is made of low density polyethylene.

3. The laminate according to claim 1 or 2, **characterized in that** the fibers in the nonwoven fabric are polypropylene fibers.

4. The laminate according to any one of the claims 1-3, **characterized in that** the nonwoven fabric is extrusion coated with the thermoplastic film.

5. The laminate according to any one of the claims 1-3, **characterized in that** the nonwoven fabric and the thermoplastic film are heat laminated.

6. The laminate according to any one of the claims 1-5, **characterized in that** the film is breathable.

7. The laminate according to claim 6, **characterized in that** the film is a microporous or monolithic film.

8. A process for producing a nonwoven/film laminate comprising the following steps:
- manufacturing of a thermally bonded, polyolefin nonwoven fabric from carded staple fibers manufacturing of a thermoplastic film
- laminating the fabric and the film,
**characterized in that** the thermobonded nonwoven fabric is made of polyolefin fibers with oxidatively degraded outer surface.

9. The process according to claim 8, **characterized in that** the fabric is extrusion coated with the film.

10. The process according to claim 8, **characterized in that** the fabric and the film are heat laminated.

11. The use of the laminate material according to any of claims 1-7 in medical or hygiene applications, such as in baby diapers, sanitary napkins, bedpads, incontinent briefs, protective covers and infection control products.

## Patentansprüche

1. Laminat mit wenigstens einer wärmeverbundenen Vliesstoff-Schicht aus kardierten Polyolefin-Stapelfasern, auf die wenigstens eine, Schicht aus einer thermoplastischen Folie laminiert ist, **dadurch gekennzeichnet, daß** die Polyolefinfasern eine oxidativ degradierte äußere Oberfläche haben.

2. Laminat nach Anspruch 1, **dadurch gekennzeichnet, daß** die Folie aus einem Polyethylen geringer Dichte hergestellt ist.

3. Laminat nach Anspruch 1 oder 2, **dadurch gekennzeichnet, daß** die Fasern im Vliesstoff Polypropylenfasern sind.

4. Laminat nach einem der Ansprüche 1 - 3, **dadurch gekennzeichnet, daß** der Vliesstoff durch Extrusion mit der thermoplastischen Folie beschichtet ist.

5. Laminat nach einem der Ansprüche 1 - 3, **dadurch gekennzeichnet, daß** der Vliesstoff und die thermoplastische Folie wärmelaminiert sind.

6. Laminat nach einem der Ansprüche 1 - 5, **dadurch gekennzeichnet, daß** die Folie atmungafähig ist.

7. Laminat nach Anspruch 6, **dadurch gekennzeichnet, daß** die Folie mikroporös oder monolithisch ist.

8. Verfahren zur Herstellung eines Vlies/Folienlaminats, das folgende Schritte aufweist:
- das Herstellen eines wärmeverbundenen Polyolefin-Vliesstoffs aus kardierten Stapelfasern,
- das Herstellen einer thermoplastischen Folie und
- das Laminieren des Stoffes und der Folie,
**dadurch gekennzeichnet, daß** der wärmeverbundene Vliesstoff aus Polyolefinfasern mit oxidativ degradierter äußerer Oberfläche hergestellt ist.

9. Verfahren nach Anspruch 8, **dadurch gekennzeichnet, daß** der Stoff durch Extrusion mit der Folie beschichtet ist.

10. Verfahren nach Anspruch 8, **dadurch gekennzeichnet, daß** der Stoff und die Folie warmelaminiert sind.

11. Anwendung des laminierten Materials nach einem der Ansprüche 1 - 7 für medizinische oder hygienische Zwecke, zum Beispiel in Baby-Windeln, Damenbinden, Bettmatten, kurzen Inkontinenz-Unterhosen, Schutzdecken und Infektionsschutzerzeugnissen.

## Revendications

1. Matériau stratifié comprenant au moins une couche de tissu non tissé thermolié de fibres courtes polyoléfiniques cardées et, stratifiée sur celle-ci, au moins une couche de film thermoplastique, **caractérisé en ce que** les fibres polyoléfiniques ont une surface externe décomposée par oxydation.

2. Matériau stratifié selon la revendication 1, **caractérisé en ce que** le film est en polyéthylène basse densité.

3. Matériau stratifié selon la revendication 1 ou 2, **caractérisé en ce que** les fibres du tissu non tissé sont des fibres de polypropylène.

4. Matériau stratifié selon l'une quelconque des revendications 1 à 3, **caractérisé en ce que** le tissu non tissé est enduit par extrusion avec le film thermoplastique.

5. Matériau stratifié selon l'une quelconque des revendications 1 à 3, **caractérisé en ce que** le tissu non tissé et le film thermoplastique sont stratifiés à la flamme.

6. Matériau stratifié selon l'une quelconque des revendications 1 à 5, **caractérisé en ce que** le film est perméable à l'air.

7. Matériau stratifié selon la revendication 6, **caractérisé en ce que** le film est un film microporeux ou monolithique.

8. Procédé pour la production de matériau stratifié non tissé/film comprenant les étapes suivantes :
fabrication d'un tissu non tissé polyoléfinique thermolié à partir de fibres courtes cardées
fabrication d'un film thermoplastique
stratification du tissu et du film,
**caractérisé en ce que** le tissu non tissé thermolié est composé de fibres polyoléfiniques dont la surface externe est décomposée par oxydation.

9. Procédé selon la revendication 8, **caractérisé en ce que** le tissu est enduit par extrusion avec le film.

10. Procédé selon la revendication 8, **caractérisé en ce que** le tissu et le film sont stratifiés à la flamme.

11. Utilisation du matériau stratifié selon l'une quelconque des revendications 1 à 7 dans le domaine médical ou de l'hygiène, tels que les couches, les serviettes hygiéniques, les alèses, les culottes d'incontinence, les couvertures de protection et les produits de prévention de l'infection.
